# EUROPEAN PATENT SPECIFICATION

(11) **EP 3 144 173 B1**
(45) Date of publication and mention of the grant of the patent: **29.08.2018**
(21) Application number: 16179339.3
(22) Date of filing: 13.07.2016
(51) Int. Cl.: B60K 37/06, B60H 1/00, F16C 1/10, F16C 1/18, G05G 1/08, G05G 7/10

(54) **A DOUBLE-CABLE MOTION TRANSMITTING DEVICE FOR A VEHICLE HVAC SYSTEM**
DOPPELKABELBEWEGUNGSÜBERTRAGUNGSVORRICHTUNG FÜR EINE KRAFTFAHRZEUGKLIMAANLAGE
DISPOSITIF DE TRANSMISSION DE MOUVEMENT À DOUBLE CÂBLE POUR UN SYSTÈME DE CLIMATISATION DE VÉHICULE

(30) Priority: 16.07.2015 IT UB20152230
(43) Date of publication of application: 22.03.2017
(73) Proprietor: DENSO THERMAL SYSTEMS S.p.A., 10046 Poirino (Torino) (IT)
(72) Inventor: BELLUOMO, Denis, I-10046 POIRINO (Torino) (IT); CARBONE, Andrea, I-10046 POIRINO (Torino) (IT)
(74) Representative: Vanzini, Christian

(56) References cited:
- EP-A1- 2 014 490
- FR-A- 805 979
- JP-A- 2002 221 216

## Description

The present invention relates to a double-cable movement transmission device which can be used in particular for the control of air-conditioning systems in motor vehicles.

In particular, the invention relates to a transmission device comprising
a base made of plastic material and provided with a circular seat, in the centre of which a shank part having a through-hole is formed, and
a rotating pulley made of plastic material for receiving a pair of control cables to be fastened thereto for connection to a second rotating pulley, said rotating pulley comprising a hub part extending inside the through-hole and a collar part concentric with the hub part and extending inside the circular seat.

Devices of this kind are commonly used in control assemblies known in the sector as "pull-pull" type controls and comprising a control device and an actuator device, both provided with a rotating pulley and being connected together by two cables each of which is fastened both to the pulley of the control device and to the pulley of the actuator device. An example of these assemblies showing the features of the preamble of claim 1 is described in the publication EP 2 014 490 A1. The object of the present invention is to provide a double-cable movement transmission device which is both simpler and less costly than the devices of the known type and which is formed by a smaller number of components. A further object of the present invention is to provide a movement transmission device which may be easily configured for use in different applications.

These objects are achieved according to the invention by a device of the type defined initially, in which the circular seat has arranged inside it an assembly for marking the angular positions of the pulley, said marking assembly comprising
a circular sliding track formed on a radially outer surface of the collar part of the rotating pulley, a plurality of notches angularly spaced from one another being formed on said sliding track, and
a mounting seat for a spring element adapted to engage the sliding track, said mounting seat being formed on a bottom wall of the circular seat.

Preferred embodiments of the invention are defined in the dependent claims which are to be understood as forming an integral part of the present description.

Further characteristic features and advantages of the device according to the invention will become clear from the following detailed description of an embodiment of the invention, provided with reference to the accompanying drawings which are provided purely by way of a non-limiting example, wherein:
- Figure 1 is a perspective view of a control assembly according to the invention;
- Figures 2 and 3 are exploded views of a movement transmission device of the control assembly according to Figure 1;
- Figure 4 is a plan view of a movement transmission device of the control assembly according to Figure 1;
- Figure 5 is radially longitudinally sectioned view of a movement transmission device of the control assembly according to Figure 1;
- Figures 6 and 7 are perspective views, from opposite sides, of a base of a movement transmission device of the control assembly according to Figure 1;
- Figures 8 and 9 are perspective views, from opposite sides, of a rotating pulley of a movement transmission device of the control assembly according to Figure 1;
- Figure 10 is a view showing the assembly of servomotor on a movement transmission device of the control assembly according to Figure 1;
- Figure 11 is a perspective view showing an arrangement of cables for the control assembly according to Figure 1;
- Figure 12 is a perspective view of a component of a movement transmission device of the control assembly according to Figure 1; and
- Figures 13 to 15 are perspective views showing assembly of the component according to Figure 12 on a base of a movement transmission device of the control assembly according to Figure 1, in three different operating positions.

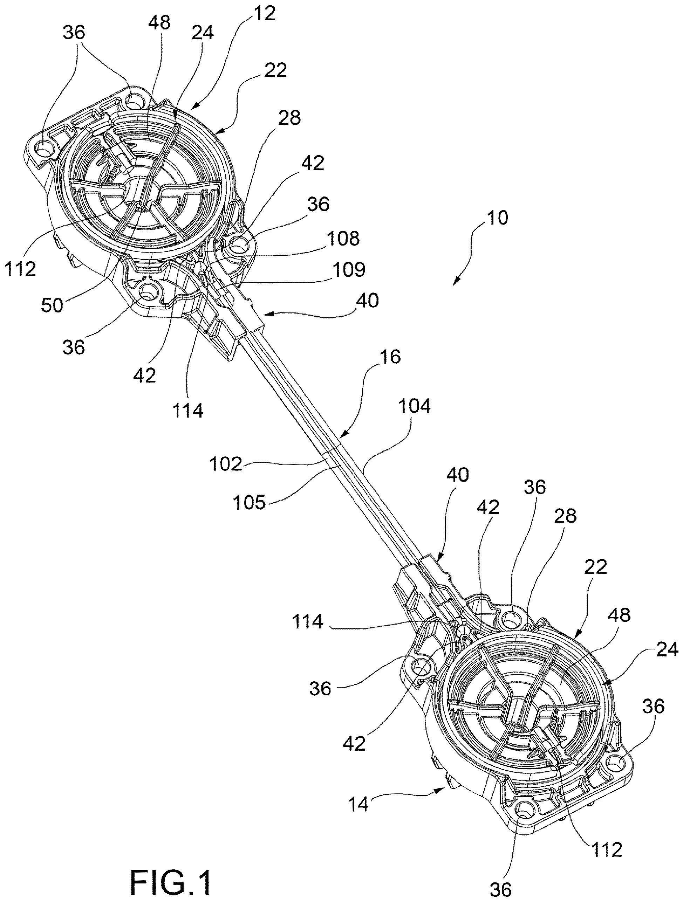

With reference to Figure 1, this shows a double-cable rotating control assembly 10 according to the present invention. The control assembly comprises a first movement transmission device, indicated by 12 in the figures, and a second movement transmission device similar to the first device - indicated by 14 - and connected to the latter by means of a double-cable flexible transmission 16.

The first and second movement transmission devices 12, 14 are designed to be fixed to respective supports (not shown). For example, one of them could be fixed to a support arranged on the dashboard of a vehicle, while the other one could be fixed to the housing of an air distribution and processing assembly. The control assembly 10 may be used, for example, to regulate the temperature of the air flow introduced into the vehicle compartment or to select the outflow direction of the air flow (towards the feet, front vents, side vents, defrosting, etc.). The assembly 10 may also be used to select the entry direction of the air flow to be processed (recirculating or external air flow). Generally, the control assembly 10 may be used in all those applications where it is required to operate remotely a device by means of a rotating control.

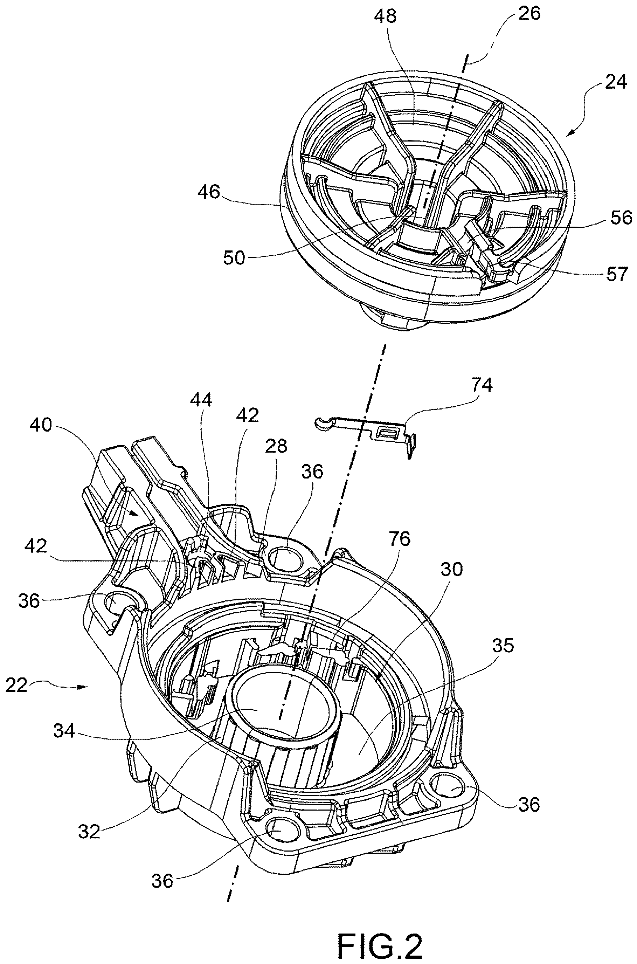

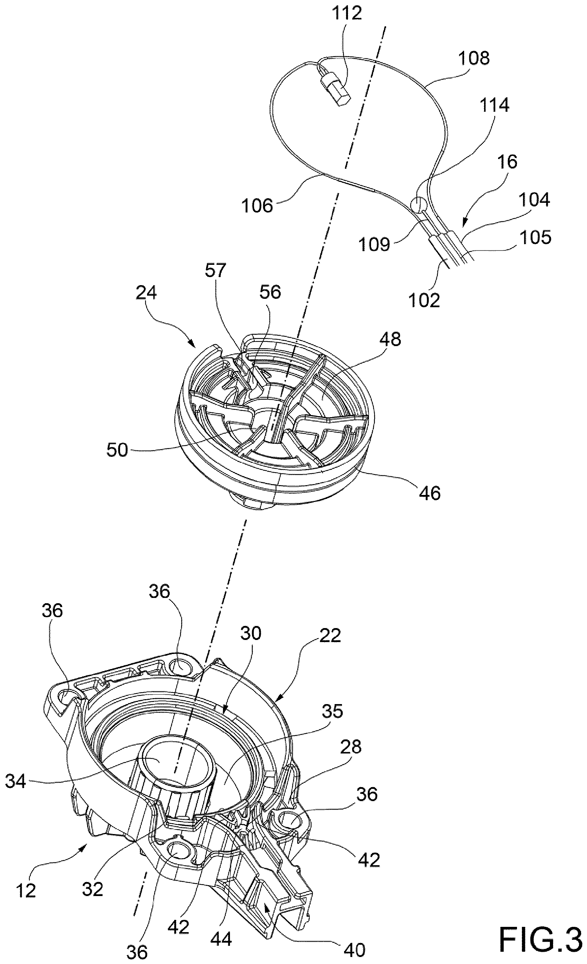

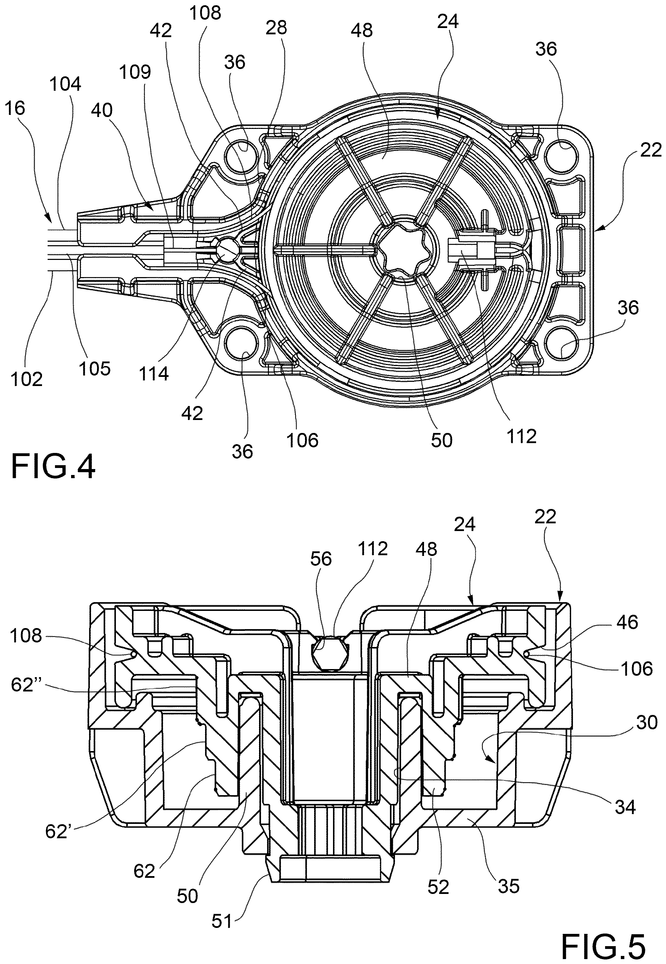

With reference to Figures 2 to 5, the movement transmission device 12 comprises a base 22 and a pulley 24 mounted rotatably with respect to the base 22 about an axis 26. Preferably, both the base 22 and the pulley 24 are made of injection-mould plastic material.

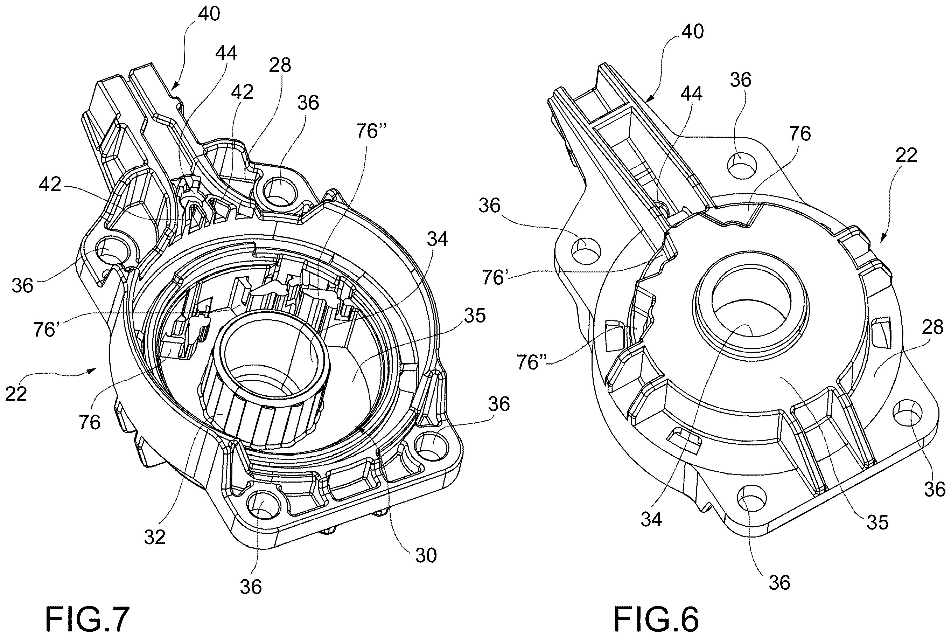

With reference also to Figures 6 and 7, the base 22 has a front wall 28 which is provided with a circular seat 30, in the centre of which a shank part 32 having a through-hole 34 is formed. The circular seat 30 has a bottom wall 35 which centrally is connected to the shank part 32 and peripherally is connected to the remaining part of the base 22, by means of a side wall of the circular seat 30. The base 22 is provided with fixing holes 36 arranged at respective corners of the base 22. The base 22 further comprises an integral guiding portion 40 provided with two elastically deformable wings 42 arranged above the front wall 28. A fastening seat 44 is provided between the two wings 42.

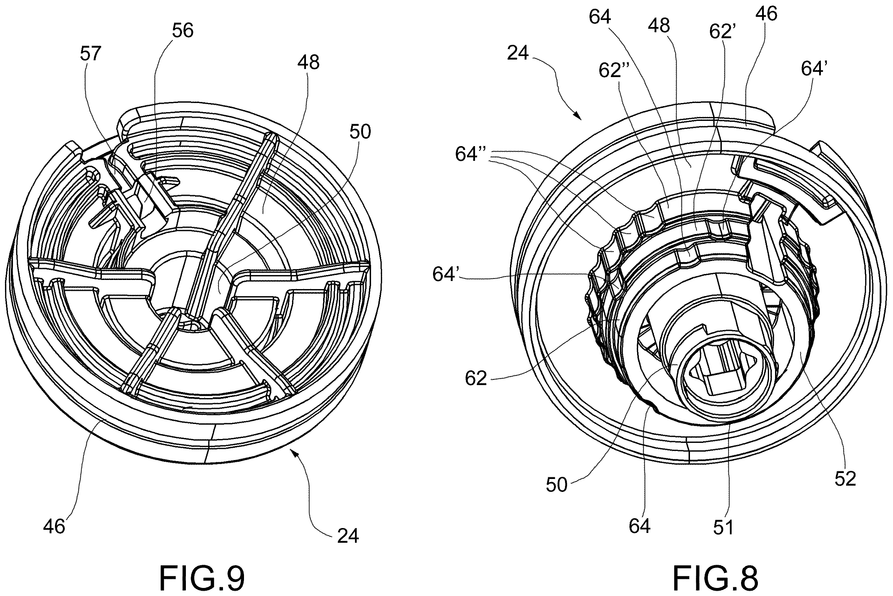

With reference also to Figures 8 and 9, the pulley 24 comprises a circumferential groove 46 for winding the control cables. The pulley 24 has a front wall 48 provided with a central hub part 50 which extends inside the through-hole 34. The hub part 50 of the pulley 24 has a free end with a tapered radial projection 51 snap-engaged inside the through-hole 34 of the base 22. Moreover, the front wall 48 of the pulley 24 has, formed thereon, a collar part 52 concentric with the hub part 50 and extending inside the circular seat 30 around the shank part 32. The pulley 24 rests on the base 22 by means of a front wall part 48 thereof arranged between the hub part 50 and the collar part 52.

The front wall 48 of the pulley also has, formed therein, a fastening seat 56 with a prismatic shape adjacent to the circumferential groove 46 and directly communicating therewith, via a guide 57 also formed on the front wall 48 of the pulley 24 and extending along a diametral axis of the pulley.

The base 22 and the pulley 24 of the second movement transmission device 14 are identical to the base 22 and to the pulley 24 of the first movement transmission device 12 described above. As will become clear below, the base 22 and the pulley 24 are configured so that they may be associated equally well with the specific components of the two movement transmission devices. The advantages which arise from the possibility of using the same main components for the two devices are significant, both from the point of view of production costs and from the point of view of assembly of the control assembly.

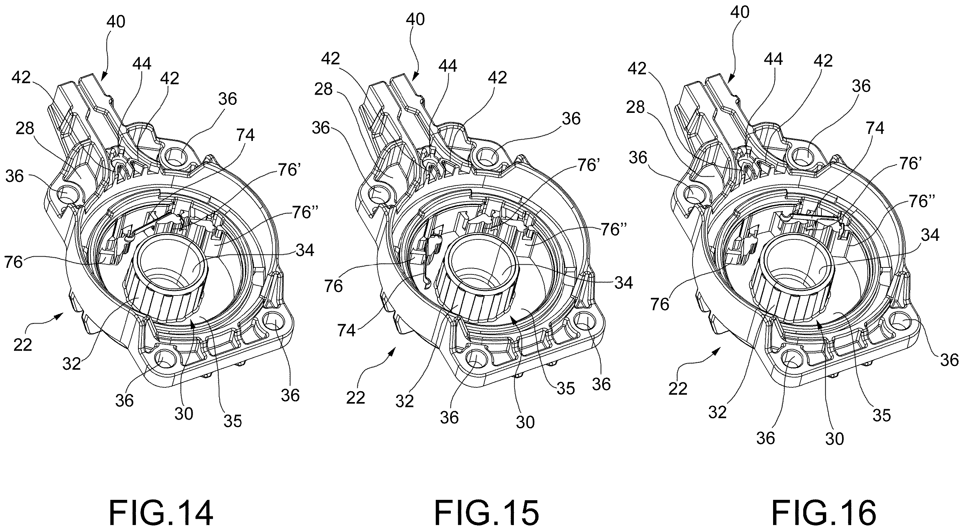

With reference to Figure 7, 8 and 12-15, an assembly for marking the angular positions of the pulley is arranged inside the circular seat 30.

As shown in particular in Figure 8, the marking assembly comprises a plurality of annular sliding tracks 62, 62', 62" formed on a radially outer surface of the collar part 52 of the rotating pulley 24 and arranged at different levels along the collar part 52. The annular sliding tracks 62, 62', 62" also have different radiuses from one another. A plurality of notches 64, 64', 64" angularly spaced from one another are formed on each of these sliding tracks 62, 62', 62". As can be seen in Figure 8, the notches 64, 64', 64" are angularly distributed differently from one sliding track to another.

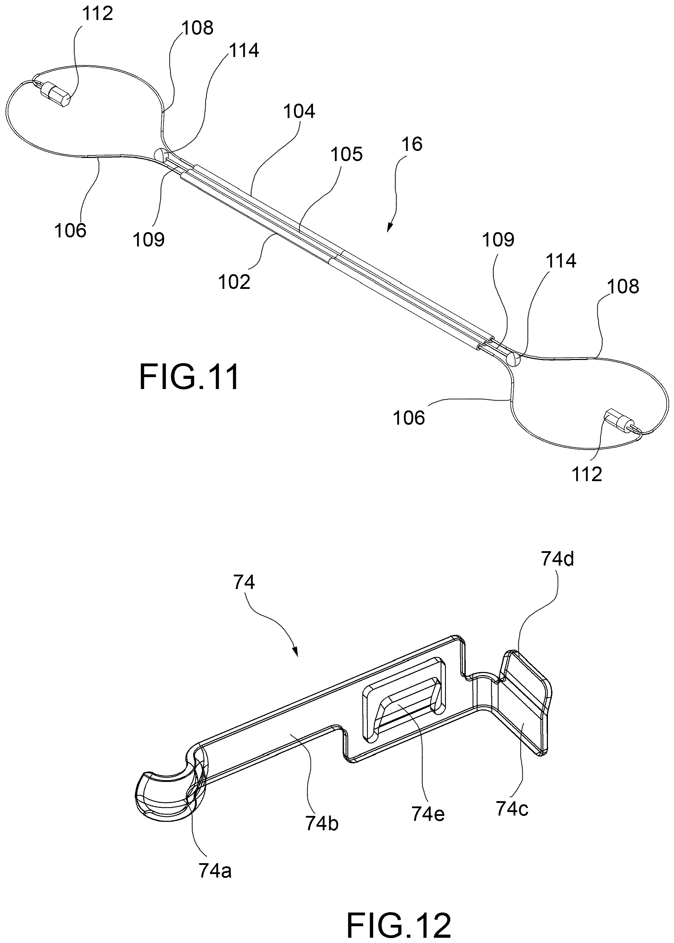

As shown in particular in Figure 12, the marking assembly further comprises a spring element 74 having a distal end 74a engaging with one of the sliding tracks 62, 62', 62" and fixed to the base in the region of a mounting seat 76 formed on the bottom wall 35 of the circular seat 30. More precisely, as shown in Figures 7 and 13-15 there is a plurality of mounting seats 76, 76', 76" for the spring element 74, arranged at different levels with respect to the bottom wall 35 of the circular seat 30. The levels of the mounting seats 76, 76', 76" correspond to the levels of the sliding tracks 64, 64', 64". Moreover, the mounting seats 76, 76', 76" for the spring element are arranged at different distances from the axis of rotation 26 of the rotating pulley 24.

The spring element 74 consists of a lamina of metal material tangentially arranged with respect to one of the annular sliding tracks 76, 76', 76" and its distal end 74a has a radially inwardly directed projection.

More precisely, the spring element 74 is L-shaped and comprises a long arm 74b and a short arm 74c extending from a proximal end of the long arm 74b, and each of the mounting seats 76, 76', 76" comprises two seat sections arranged at an angle with respect to each other and designed to receive respectively the short arm 74c and a part of the long arm 74b of the spring element 74. The short arm 74c and the long arm 74b of the spring element 74 are provided with respective elastic tabs 74d, 74d for forced-fitting inside the respective seat sections of the mounting seat 76, 76', 76" in which the spring element 74 is mounted.

Depending on the mounting seat 76, 76', 76" in which it is mounted, the distal end 74a of the spring element 74 is intended to slide on the surface of one of the annular sliding tracks 62, 62', 62" and engage selectively the notches 64, 64' or 64" in order to mark the angular position of the pulley 24 with respect to the base 22.

With the configuration described above, the same device may be used in various applications in which different marking of the angular positions of the pulley is required (for example for air mixing, distribution and entry - see Figures 13-15) or also in other applications where no marking is required, by simply not mounting the spring element on the base.

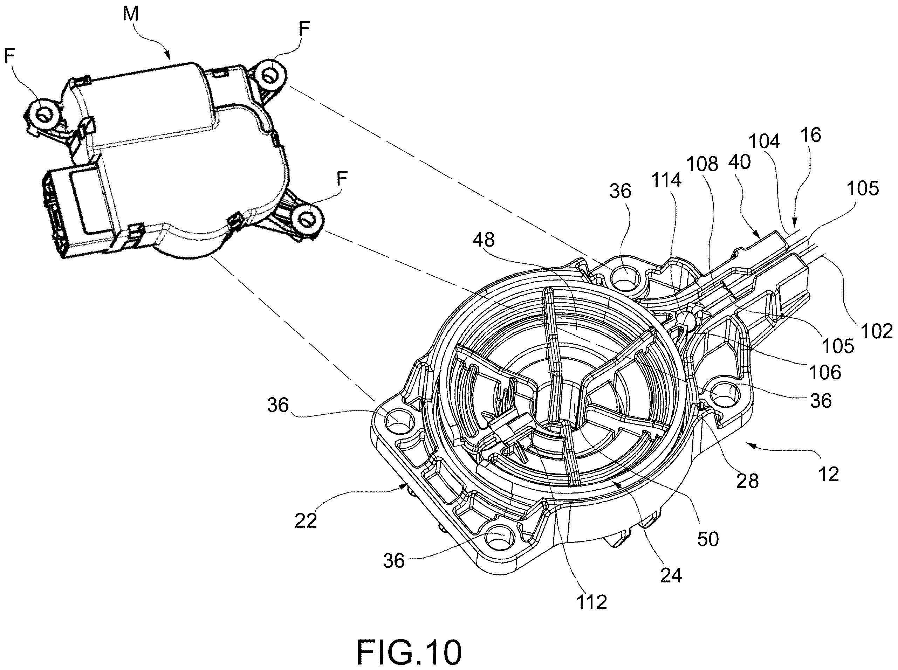

With reference to Figure 10, the mounting holes 36 arranged at the corners of the base 22 allow the transmission device to be used in the same mounting seats used for the servomotors. The body of the servomotor, indicated by M in the Figure, is in fact provided with a plurality of through-holes F arranged so as to correspond to the holes 36 in the base 22 and therefore either one of the servomotor M and the base 22 may be connected alternately to a respective support (not shown) by means of screws or similar fixing elements, depending on whether automatic or manual controls are to be provided.

With reference to Figures 1 and 11, the flexible transmission 16 comprises two parallel sheaths 102, 104 which are fixed together and inside which respective cables 106, 108 are slidably fixed. A third sheath 105 is arranged between the two sheaths 102, 104 and has, inserted inside it, a fixed cable 109 having the function of making the flexible transmission 16 more rigid and fixing over time the free length of the cable. The sliding cables 106, 108 are inserted inside the guiding portions 40 of the bases 22 of the first and second movement transmission devices and are wound onto respective sections of the circumferential grooves 46 of the pulleys 24. The opposite ends of the two cables 106, 108 are both fixed to a single fixing member 112 with a prismatic shape housed inside the seat 56 of each of the pulleys 24. The elastic wings 42 press elastically against the cables 106, 108 in the immediate vicinity of the zones where the cables 106, 108 are wound onto the pulleys 24. The elastic force applied by the wings 42 to the cables 106, 108 allows compensation of any play in the flexible transmission 16. The third cable 109 is provided at its ends with ball-like anchoring elements 114 which are inserted inside the seats 44 of the bases 22. The third cable 109 is slidable inside the third sheath 105 arranged between the two sheaths 102, 104.

The bases 22 of the two movement transmission devices are fixed to the respective supports (not shown) by means of screws or similar fixing elements which extend through the hoes 36 and engage corresponding fixing portions provided on these supports.

As can be understood, the control assembly described above is made using a very small number of parts, namely three parts maximum for each movement transmission device (base 22, pulley 24 and any spring element 74) plus the flexible transmission; however, although being limited in number, these parts may be arranged and configured in different ways depending on the applicational requirements.

## Claims

1. Double-cable movement transmission device, comprising
a base (22) made of plastic material and provided with a circular seat (30), in the centre of which a shank part (32) having a through-hole (34) is formed,
a rotating pulley (24) made of plastic material for receiving a pair of control cables (106, 108) to be fastened thereto for connection to a second pulley, said rotating pulley comprising a hub part (50) extending inside the through-hole (34) and a collar part (52) concentric with the hub part (50) and extending inside the circular seat (30), wherein an assembly for marking angular positions of the pulley is arranged inside the circular seat (30), **characterized by** said marking assembly comprising
a circular sliding track (62, 62', 62") formed on a radially outer surface of the collar part (52) of the rotating pulley (24), a plurality of notches (64, 64', 64") angularly spaced from one another being formed on said sliding track, and
a mounting seat (76, 76', 76") for a spring element (74) adapted to engage the sliding track (64, 64', 64"), said mounting seat being formed on a bottom wall (35) of the circular seat (30).

2. Device according to Claim 1, wherein the marking assembly comprises
a plurality of circular sliding tracks (62, 62', 62") arranged at different levels along the collar part (52) of the rotating pulley (24), a plurality of notches (64, 64', 64") angularly spaced from one another being formed on each of said sliding tracks and being distributed in different ways from one sliding track to another,
a plurality of mounting seats (76, 76', 76") for the spring element (74), arranged at different levels with respect to the bottom wall (35) of the circular seat (30).

3. Device according to Claim 2, wherein the circular sliding tracks (62, 62', 62") have different radiuses from one another and wherein the mounting seats (76, 76', 76") for the spring element (74, 74', 74") are arranged at different distances from the rotation axis (26) of the rotating pulley (24).

4. Device according to one of the preceding claims, further comprising the spring element (74) formed by a lamina of metal material tangentially arranged with respect to the circular sliding track (62, 62', 62") and having a distal end (74a) with a radially inwardly directed projection provided for engaging the sliding track (62, 62', 62").

5. Device according to Claim 4, wherein the spring element (74) is L-shaped and comprises a long arm (74b) and a short arm (74c) extending from a proximal end of the long arm (74b), and the mounting seat (76, 76', 76") comprises two seat sections arranged angularly with respect to each other and adapted to receive the short arm (74c) and a proximal part of the long arm (74b) of the spring element (74), respectively.

6. Device according to Claim 5, wherein the short arm (74c) and the long arm (74b) of the spring element (74) are provided with elastic tabs (74d, 74e) for forced-fitting inside the respective seat sections of the mounting seat (76, 76', 76").

7. Device according to one of the preceding claims, wherein the hub part (50) of the pulley (24) has a free end with a tapered radial projection (51) snap-fitted into the through-hole (34) of the base (22).

8. Device according to one of the preceding claims, wherein the rotating pulley (24) comprises a circumferential groove (46) for winding the control cables (106, 108), and a fastening seat (56) arranged adjacent to and directly communicating with the circumferential groove (46) for receiving an anchoring element (112) secured to the ends of both cables.

9. Device according to Claim 8, wherein the base (22) comprises a fastening seat (44) for receiving a ball-shaped anchoring element (114) secured to an end of an intermediate cable (109) arranged between the control cables (106, 108).

## Patentansprüche

1. Vorrichtung zur Übertragung einer Doppelkabelbewegung, aufweisend
eine Basis (22) aus Plastik, welche mit einem runden Sitz (30) versehen ist, in dessen Mitte ein Schaftteil (32) mit einem Durchgangsloch (34) ausgebildet ist,
eine rotierende Scheibe (24) aus Plastik zur Aufnahme eines Paares von Steuerkabeln (106, 108), welches zur Verbindung mit einer zweiten Scheibe an dieser zu befestigen ist, wobei die rotierende Scheibe ein sich innerhalb des Durchgangslochs (34) erstreckendes Nabenteil (50) und ein Kragenteil (52) aufweist, welches konzentrisch zu dem Nabenteil (50) ist und sich innerhalb des runden Sitzes (30) erstreckt,
wobei eine Anordnung zum Markieren von Winkelstellungen der Scheibe innerhalb des runden Sitzes (30) angeordnet ist, **gekennzeichnet dadurch, dass**
die Markierungsanordnung aufweist:
eine kreisförmige Laufschiene (62, 62', 62"), die auf einer radial äußeren Oberfläche des Kragenteils (52) der rotierenden Scheibe (24) ausgebildet ist, wobei eine Vielzahl von winklig voneinander beabstandeten Einkerbungen (64, 64', 64") auf der Laufschiene ausgebildet ist, und
einen Montagesitz (76, 76', 76") für ein Federelement (74), das dazu geeignet ist, in die Laufschiene (64, 64', 64") einzugreifen, wobei der Montagesitz an einer Bodenwand (35) des runden Sitzes (30) ausgebildet ist.

2. Vorrichtung nach Anspruch 1, wobei die Markierungsanordnung aufweist:
eine Vielzahl von kreisförmigen Laufschienen (62, 62', 62"), welche auf unterschiedlichen Ebenen entlang des Kragenteils (52) der rotierenden Scheibe (24) ausgebildet sind, wobei eine Vielzahl von winklig voneinander beabstandeten Einkerbungen (64, 64', 64") auf jeder der Laufschienen ausgebildet ist und welche auf unterschiedliche Weise von einer Laufschiene zu einer anderen zugeteilt werden,
eine Vielzahl von Montagesitzen (76, 76', 76") für das Federelement (74), welche bezüglich der Bodenwand (35) des runden Sitzes (30) auf unterschiedlichen Niveaus angeordnet sind.

3. Vorrichtung nach Anspruch 2, wobei die kreisförmigen Laufschienen (62, 62', 62") voneinander abweichende Radien aufweisen und wobei die Montagesitze (76, 76', 76") für das Federelement (74, 74', 74") in unterschiedlichen Entfernungen von der Drehachse (26) der rotierenden Scheibe (24) angeordnet sind.

4. Vorrichtung nach einem der vorangehenden Ansprüche, weiter aufweisend das Federelement (74), welches aus einer Lamelle aus Metallmaterial geformt ist, welche in Bezug auf die kreisförmige Laufschiene (62, 62', 62") tangential angeordnet ist, und welches ein distales Ende (74a) mit einem radial nach innen gerichteten Vorsprung zum Eingriff in die Laufschiene (62, 62', 62") aufweist.

5. Vorrichtung nach Anspruch 4, wobei das Federelement (74) L-förmig ist und einen langen Arm (74b) und einen kurzen Arm (74c) aufweist, welcher sich von einem proximalen Ende des langen Arms (74b) erstreckt, und wobei der Montagesitz (76, 76', 76") zwei Auflageabschnitte aufweist, welche winklig zueinander beabstandet sind und dazu geeignet sind, jeweils den kurzen Arm (74c) und einen proximalen Teil des langen Arms (74b) des Federelements (74) aufzunehmen.

6. Vorrichtung nach Anspruch 5, wobei der kurze Arm (74c) und der lange Arm (74b) des Federelements (74) mit elastischen Laschen (74d, 74e) zur Zwangsmontage in die entsprechenden Aufnahmeabschnitte des Montagesitzes (76, 76', 76") versehen sind.

7. Vorrichtung nach einem der vorangehenden Ansprüche, wobei das Nabenteil (50) der Scheibe (24) ein freies Ende mit einem kegelförmigen Radialüberstand (51) aufweist, welcher in das Durchgangsloch (34) der Basis (22) eingerastet ist.

8. Vorrichtung nach einem der vorangehenden Ansprüche, wobei die rotierende Scheibe (24) eine umlaufende Rille (46) zum Aufwickeln der Steuerkabel (106, 108) sowie einen benachbarten und direkt mit der umlaufenden Rille (46) in Verbindung stehenden Befestigungssitz (56) zur Aufnahme eines an den Enden beider Kabel befestigten Ankerelements (112) aufweist.

9. Vorrichtung nach Anspruch 8, wobei die Basis (22) einen Befestigungssitz (44) zur Aufnahme eines ballförmigen Ankerelements (114) aufweist, welches an einem Ende eines zwischen den Steuerkabeln (106, 108) angeordneten Zwischenkabels (109) befestigt ist.

## Revendications

1. Dispositif de transmission de mouvement à double câble, comprenant
une base (22) composée de matière plastique et dotée d'un siège circulaire (30), dans le centre duquel est formée une partie tige (32) comprenant un trou traversant (34),
une poulie rotative (24) composée de matière plastique pour recevoir une paire de câbles de commande (106, 108) devant être fixés à celle-ci pour un raccordement à une seconde poulie, ladite poulie rotative comprenant une partie moyeu (50) s'étendant à l'intérieur du trou traversant (34) et une partie bride (52) concentrique avec la partie moyeu (50) et s'étendant à l'intérieur du siège circulaire (30),
dans lequel
un ensemble pour marquer des positions angulaires de la poulie est agencé à l'intérieur du siège circulaire (30), **caractérisé par**
ledit ensemble de marquage comprenant
une piste coulissante circulaire (62, 62', 62") formée sur une surface radialement externe de la partie bride (52) de la poulie rotative (24), une pluralité d'encoches (64, 64', 64") angulairement espacées les unes des autres étant formée sur ladite piste coulissante, et
un siège de montage (76, 76', 76") pour un élément de ressort (74) adapté à entrer en prise avec la piste coulissante (64, 64', 64"), ledit siège de montage étant formé sur une paroi inférieure (35) du siège circulaire (30).

2. Dispositif selon la revendication 1, dans lequel l'ensemble de marquage comprend
une pluralité de pistes coulissantes circulaires (62, 62', 62") agencées à différents niveaux le long de la partie bride (52) de la poulie rotative (24), une pluralité d'encoches (64, 64', 64") angulairement espacées les unes des autres étant formée sur chacune desdites pistes coulissantes et étant répartie de différentes manières d'une piste coulissante à une autre,
une pluralité de sièges de montage (76, 76', 76") pour l'élément de ressort (74), agencée à différents niveaux par rapport à la paroi inférieure (35) du siège circulaire (30).

3. Dispositif selon la revendication 2, dans lequel les pistes coulissantes circulaires (62, 62', 62") présentent différents rayons les unes des autres et dans lequel les sièges de montage (76, 76', 76") pour l'élément de ressort (74, 74', 74") sont agencés à différentes distances de l'axe de rotation (26) de la poulie rotative (24).

4. Dispositif selon l'une des revendications précédentes, comprenant en outre l'élément de ressort (74) formé par une plaque de matériau métallique tangentiellement agencée par rapport à la piste coulissante circulaire (62, 62', 62") et comprenant une extrémité distale (74a) dotée d'une saillie dirigée radialement vers l'intérieur fournie pour entrer en prise avec la piste coulissante (62, 62', 62").

5. Dispositif selon la revendication 4, dans lequel l'élément de ressort (74) est en forme de L et comprend un bras long (74b) et un bras court (74c) s'étendant à partir d'une extrémité proximale du bras long (74b), et le siège de montage (76, 76', 76") comprend deux sections de siège agencées angulairement l'une par rapport à l'autre et adaptées à recevoir le bras court (74c) et une partie proximale du bras long (74b) de l'élément de ressort (74), respectivement.

6. Dispositif selon la revendication 5, dans lequel le bras court (74c) et le bras long (74b) de l'élément de ressort (74) sont dotés de pattes élastiques (74d, 74e) pour un ajustement forcé à l'intérieur des sections de siège respectives du siège de montage (76, 76', 76").

7. Dispositif selon l'une des revendications précédentes, dans lequel la partie moyeu (50) de la poulie (24) comprend une extrémité libre avec une saillie radiale conique (51) encliquetée dans le trou traversant (34) de la base (22).

8. Dispositif selon l'une des revendications précédentes, dans lequel la poulie rotative (24) comprend une rainure circonférentielle (46) pour enrouler les câbles de commande (106, 108), et un siège de fixation (56) agencé adjacent à et communiquant directement avec la rainure circonférentielle (46) pour recevoir un élément d'ancrage (112) fixé aux extrémités des deux câbles.

9. Dispositif selon la revendication 8, dans lequel la base (22) comprend un siège de fixation (44) pour recevoir un élément d'ancrage sphérique (114) fixé à une extrémité d'un câble intermédiaire (109) agencé entre les câbles de commande (106, 108).
